# EUROPEAN PATENT APPLICATION

(11) **EP 4 586 675 A1**
(43) Date of publication of application: **16.07.2025**
(21) Application number: 23862679.0
(22) Date of filing: 15.02.2023
(51) Int. Cl.: H04W 24/10, H04W 72/0446

(54) **BASE STATION DEVICE, TERMINAL DEVICE, CONTROL METHOD AND PROGRAM FOR EFFICIENT WIRELESS QUALITY MEASUREMENT**

(30) Priority: 05.09.2022 JP 2022141010
(71) Applicant: KDDI Corporation, Tokyo 163-8003 (JP)
(72) Inventor: TAKEDA, Hiroki, Tokyo 163-8003 (JP); UMEHARA, Masahito, Tokyo 163-8003 (JP); LI, Yanwei, Tokyo 163-8003 (JP)
(74) Representative: Mathys & Squire
(86) International application number: PCT/JP2023/005167
(87) International publication number: WO 2024/053129

(57) **Abstract**

A base station device notifies, through Layer 3 signaling, a first terminal device of settings information for measurement of a first quality of an uplink signal which interferes with a downlink signal received by the first terminal device and which is transmitted by a second terminal device, and transmits to the first terminal device, through Layer 1 or Layer 2 signaling, an instruction to execute the measurement of the first quality or stop the measurement currently underway on the basis of the settings information.

## Description

### TECHNICAL FIELD

The present invention relates to a technique for improving the efficiency of measurement of uplink signals and downlink signals.

### BACKGROUND ART

Time-division duplex (TDD) is increasingly being adopted in cellular communication systems in order to use radio resources flexibly. In TDD, a time slot is allocated for both an uplink, on which a signal is transmitted from a terminal device toward a base station device, and a downlink, on which a signal is transmitted from the base station device toward the terminal device. TDD makes it possible to communicate efficiently by flexibly setting the data amount allocated to the uplink or the downlink in accordance with the data amounts on the uplink and the downlink.

However, if such flexible settings are used, the uplink signal transmitted from the terminal device may interfere with the downlink signal received by the other terminal device between cells which are adjacent to each other, for example. The downlink signal transmitted from the base station device can also interfere with the uplink signal received by another base station device. Such interference can be called cross-link interference (CLI). It is also conceivable that in two frequency resources adjacent in a cell, a common time slot is assigned to both the uplink and the downlink. Similar interference can occur in this case as well. In this manner, performing flexible control can produce interference, and it is therefore important to reduce the impact of that interference. Non-Patent Literature (NPL) 1 discloses a terminal device measuring the magnitude of CLI and reporting that magnitude to a base station device in order to operate cooperatively with the base station device to reduce the CLI.

### CITATION LIST

### NON-PATENT LITERATURE

NPL 1: 3GPP Contributions, R2-2001700, March 2020

### SUMMARY OF INVENTION

### TECHNICAL PROBLEM

When measuring interference between an uplink and a downlink, it is necessary to perform control such as pausing the communication on the uplink or the downlink of the resource where the interference is expected to occur. However, with the method described in NPL 1, the start and end of measurement are instructed through Layer 3 signaling. This can result in the period from when the interference is to be measured to when the measurement is started being prolonged, and the measurement being needlessly taken over a long period of time, for example.

### SOLUTION TO PROBLEM

The present invention provides a technique for appropriately controlling the timing at which a terminal device measures interference between an uplink and a downlink.

A base station device according to one aspect of the present invention is a base station device comprising: notification means for notifying, through Layer 3 signaling, a first terminal device of settings information for measurement of a first quality of an uplink signal which interferes with a downlink signal received by the first terminal device and which is transmitted by a second terminal device; and instruction means for transmitting to the first terminal device, through Layer 1 or Layer 2 signaling, an instruction to execute the measurement of the first quality or stop the measurement currently underway on the basis of the settings information.

A terminal device according to one aspect of the present invention is a terminal device comprising: setting means for, in a case where a downlink signal is received from a base station device to which the terminal device is connected, making a setting for measurement of a first quality of an uplink signal which interferes with the downlink signal received by the terminal device and which is transmitted by a second terminal device, by receiving settings information for the measurement of the first quality from the base station device through Layer 3 signaling; measuring means for executing an instructed measurement by receiving from the base station device, through Layer 1 or Layer 2 signaling, an instruction to execute the measurement of the first quality or stop the measurement currently underway on the basis of the settings information; and notification means for notifying the base station device of a result of the measurement.

### ADVANTAGEOUS EFFECTS OF INVENTION

According to the present invention, the timing at which a terminal device measures interference between an uplink and a downlink can be controlled appropriately.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating an example of the configuration of a wireless communication network.
FIG. 2 is a diagram illustrating an example of the hardware configuration of a device.
FIG. 3 is a diagram illustrating an example of the functional configuration of a base station device.
FIG. 4 is a diagram illustrating an example of the functional configuration of a terminal device.
FIG. 5 is a diagram illustrating an example of the flow of processing executed in the wireless communication network.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (System Configuration)

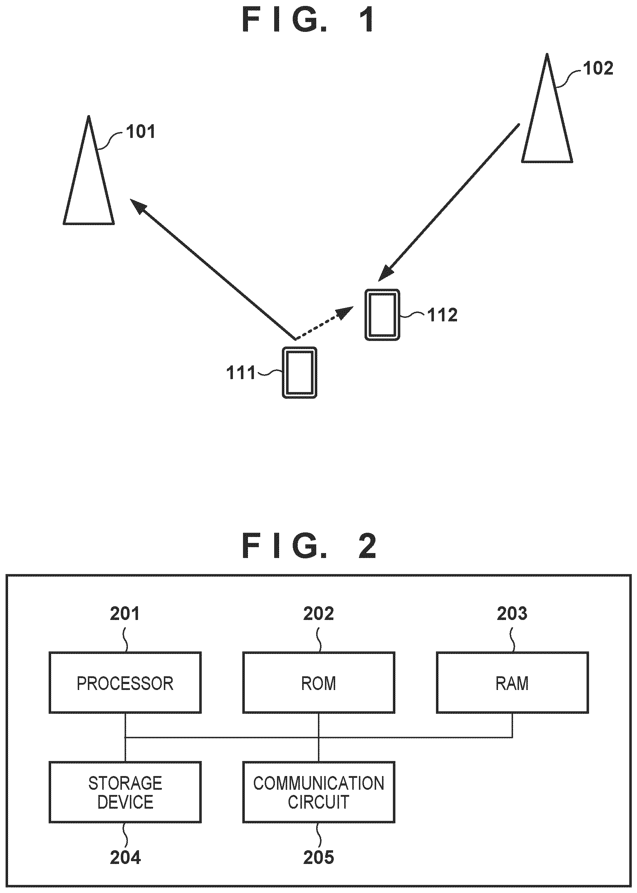

FIG. 1 illustrates an example of the configuration of a wireless communication system according to the present embodiment. The wireless communication system may be, for example, a wireless communication system compliant with the fifth-generation (5G) cellular communication standard of the Third-Generation Partnership Project (3GPP (registered trademark)). The wireless communication system includes, for example, a base station device 101 and a base station device 102, as well as a terminal device 111 and a terminal device 112. In one example, the terminal device 111 establishes a connection and communicates with the base station device 101, and the terminal device 112 establishes a connection and communicates with the base station device 102. Note that this is merely one example, and for example, both the terminal device 111 and the terminal device 112 may connect to and communicate with the base station device 101. Although FIG. 1 illustrates two base station devices and two terminal devices for the sake of simplicity, the wireless communication system can include a large number of base station devices and a large number of terminal devices without losing universality.

The present embodiment assumes that resources are allocated flexibly such that uplink communication and downlink communication are mixed in a single time slot of a single frequency band. For example, the base station device 102 can allocate downlink resources to the terminal device 112 at the timing at which the base station device 101 allocates uplink resources to the terminal device 111. In such a case, the uplink signal transmitted from the terminal device 111 may interfere with the downlink signal received by the terminal device 112. This interference can be received by the terminal device 112 at an extremely high reception power if the terminal device 111 is located nearby the terminal device 112. Then, at the position of the terminal device 112, the timing of frames can drastically differ between the timing at which the downlink signal is received and the timing at which the uplink signal transmitted from the terminal device 111 is received. In this case, even if the frequency resources used are different between the uplink and the downlink, the orthogonality of the signals cannot be guaranteed, and thus it may be the case that the interference cannot be ignored. Accordingly, in situations where such interference is present, there can be cases where the terminal device 112 cannot communicate. Additionally, the downlink signal transmitted from the base station device 102 can interfere with the uplink signal transmitted from the terminal device 111 at the position of the base station device 101. However, this interference can be suppressed to a sufficiently low level by, for example, ensuring that the base station device 101 and the base station device 102 can be positioned at a sufficient distance from each other and controlling settings such as the orientation (tilt angle) of the radio waves emitted from the base station device 102.

Accordingly, the descriptions in the present embodiment will focus on a situation where an uplink signal transmitted from the terminal device 111 interferes with a downlink signal transmitted to the terminal device 112. Note that the following discussion is applicable even when both the terminal device 111 and the terminal device 112 are connected to and communicating with the base station device 101. In other words, the processing described below can be applied when, while transmitting a downlink signal using part of the frequency resources of the usable frequency band to the terminal device 112, the base station device 101 causes the terminal device 111 to transmit an uplink signal using another part of the frequency resources in the usable frequency band. Although FIG. 1 illustrates an example in which the uplink signal transmitted by the terminal device 111 interferes with the downlink signal directed to the terminal device 112, the uplink signal transmitted by the terminal device 112 naturally can interfere with the downlink signal directed to the terminal device 111. Accordingly, in the following, the terminal device 111 and the terminal device 112 may be called "terminal devices", with the reference signs thereof omitted, when there is no need to distinguish between the two.

To handle interference between an uplink signal and a downlink signal between terminal devices, it is assumed that the surrounding environment of the terminal devices is observed and uplink resources are allocated after confirming that the effect of interference between the terminal devices is low. For example, the terminal device 112 measures the uplink signal transmitted by the terminal device 111, and the terminal device 111 measures the downlink signal received by the terminal device 112 or the like, and the allocation of resources is controlled on the basis of the results of the measurement. The terminal device detects the surrounding radio signals and measures a Received Signal Strength Indicator (RSSI), a Reference Signal Received Power (RSRP), a Reference Signal Received Quality (RSRQ), a Signal-To-Noise Ratio (SNR), and a Signal-To-Interference-Plus-Noise Ratio (SINR). The terminal device can measure a surrounding uplink signal while a downlink signal is not being transmitted, and can measure a surrounding downlink signal while an uplink signal is not being transmitted.

For example, the terminal device measures the RSRP of a Sounding Reference Signal (SRS) being transmitted by a surrounding terminal device, the RSSI of the SRS and other signals, and the like as a surrounding uplink signal, and notifies the connected base station device of the result of the measurement (the SRS-RSRP or the CLI-RSSI). Here, "CLI-RSSI" is a value indicating the magnitude of cross-link interference (CLI). This measurement can primarily be performed by a terminal device that may experience interference due to an uplink signal from a surrounding terminal device. Note that the terminal device is configured to transmit the SRS through base station device control when performing uplink communication that may interfere with downlink communication. Here, the terminal device that transmits the SRS need not transmit the uplink signal that another terminal device is transmitting. In addition, the terminal device that transmits the SRS may measure the SRS or another signal that another terminal device is transmitting in another frequency band, among the usable frequency band, excluding the frequency band in which the SRS or another signal is being transmitted, or in a period in which the SRS or another signal is not being transmitted. The terminal device may also use the RSSI for the entire usable frequency band as the result of measuring the uplink signal while the downlink signal is not being transmitted. Note that the terminal device can receive, from the base station device, information indicating the frequency resources allocated to the surrounding uplinks, and take measurements on the basis of that information.

The terminal device can measure, for example, the Channel State Information (CSI) - Reference Signal (RS) being transmitted by a surrounding base station device, the RSRP, SINR, RSSI, and the like of a synchronization signal (SS), and the like as the surrounding downlink signal. The terminal device then notifies the connected base station device of the result of the measurement (CSI-RSRP/SINR/RSSI, SS-RSRP/SINR/RSSI, or the like). The terminal device may also measure the RSSI of another signal. In one example, for the frequency band in which the CSI-RS, the SS, or the like is being transmitted, the terminal device can measure the RSRP, the SINR, and the like of those signals, and for the frequency band in which the CSI-RS, the SS, or the like is not being transmitted, can measure the RSSI in that frequency band. Note that with respect to the downlink signal, the terminal device transmitting an uplink signal that may interfere with the downlink communication can be configured to take the measurement. However, the configuration is not limited thereto, and a terminal device that may experience interference due to an uplink signal from a terminal device in the vicinity thereof may take this measurement.

In 5G, a plurality of Bandwidth Parts (BWPs) can be set for a terminal device. The terminal device can take a measurement only in the frequency band within an active BWP among the plurality of BWPs. Accordingly, if a plurality of BWPs are set, the terminal device can select the BWP to activate such that the frequency region to be measured falls within the set BWP range, and can take a measurement. In addition, if the terminal device uses a plurality of BWPs which are switched at predetermined time intervals, the terminal device may select a period during which the BWP in which an interference measurement can be taken is active, and then measure the interference in the BWP. Note that if the terminal device is unable to execute the measurement for the frequency region to be measured in any of the set BWPs, it is possible to skip taking the measurement. Furthermore, if the terminal device receives, from a base station device, a setting in which the frequency region to be measured is not included in any of the set BWPs, that setting may be discarded. In that case, the terminal device may notify the base station device that the frequency region to be measured is not included in any of the set BWPs, or that the setting has been discarded. In one example, the base station device may reset the BWPs such that such a setting is not made.

The base station device can receive the result of the measurement by the terminal device, and determine, for example, the allocation of uplink resources on the basis of the measurement result. For example, if the downlink signal reception quality in the target terminal device to which uplink resources are allocated is at least a predetermined value that is sufficiently high, it is conceivable that the terminal device has a certain resistance to interference. Accordingly, in such a case, the base station device can determine that downlink communication is possible even if there is uplink interference, and allocate uplink resources to the terminal device that obtained that measured value. On the other hand, if the downlink signal reception quality in the target terminal device to which uplink resources are allocated is less than the predetermined value, it is possible to skip allocating the uplink resources to the terminal device that obtained that measured value. Additionally, for example, the base station device can determine the allocation of downlink resources on the basis of the result of the measurement by the terminal device. For example, for a terminal device whose uplink signal strength or quality is very low and is less than a predetermined value, it is assumed that downlink communication is possible without being subjected to a large amount of interference from the uplink signal. **In** other words, it is assumed that for a first terminal device for which the uplink signal reception power is sufficiently low, a second terminal device that communicates on an uplink is not present in the vicinity thereof. Accordingly, even if uplink resources are allocated to the second terminal device in the same time slot as downlink resources allocated to the first terminal device, the effects of interference can be suppressed to a sufficient degree. Accordingly, the base station device can allocate downlink resources to the terminal device that obtained such a measured value. **In** addition, the base station device to which the terminal device that transmitted the uplink signal is connected can allocate uplink resources to that terminal device in the same time slot as the stated resources. Note that in this case, if the terminal device that is the receiver of the downlink signal and the terminal device that is the transmitter of the uplink signal are connected to the same base station device, the base station device can allocate both the uplink and the downlink. On the other hand, if the terminal device that is the receiver of the downlink signal and the terminal device that is the transmitter of the uplink signal are connected to different base station devices, the measurement results can be shared between the base station devices to which the respective terminal devices are connected, and the resources can be allocated on the basis of the measurement results. In addition, whether resources can be allocated may be determined in any of the base station devices to which each of these terminal devices is connected, and the other base station device may be notified of some of the determination results. **In** this case, the base station device that determines whether resources can be allocated can be provided with the information of the measurement result from another base station device. The base station device that determines whether the resources can be allocated may be a base station device to which a terminal device that requires uplink resources is connected, or a base station device to which a terminal device that receives a downlink signal is connected. Whether resources can be allocated may also be determined by another base station device or another network node. Note that only whether uplink resources can be allocated may be determined, and it may be assumed that the downlink resources can be allocated as a matter of course. Likewise, only whether downlink resources can be allocated may be determined, and it may be assumed that the uplink resources can be allocated as a matter of course. Although the resources can be allocated according to various criteria, this will not be described in further detail here.

The base station device is configured to notify the terminal device of the settings for causing the terminal device to take the measurements as described above. For example, the base station device can notify the terminal device that performs uplink communication of settings information for measuring the wireless quality of the downlink signal in a resource block that can be interfered with by uplink communication. For example, the base station device notifies the terminal device of the settings information, which specifies the frequency resources, so as to measure the wireless quality of the downlink in that resource block. Note that when a CSI-RS, SS, or the like is transmitted in the resource block, the terminal device may be notified of information indicating the location of the CSI-RS, the SS, the sequence thereof, or the like, as the settings information. Alternatively, the settings information may include information indicating the type of wireless quality to be measured, such as the RSSI, RSRP, SINR, or the like. In addition, the base station device may further notify the terminal device that may perform downlink communication in that resource block of settings information for measuring the wireless quality of the uplink signal transmitted by the terminal device that performs uplink communication. In this case, the settings information can include, for example, information on the resource element for which the terminal device that performs the uplink communication transmits the signal as information indicating the frequency range to be measured. For example, the settings information can include the location of the resource element for which the terminal device that performs the uplink communication transmits the SRS, information on the sequence used to generate the SRS, and the like.

Note that the base station device can notify the terminal device of the settings information through Layer 3 (e.g., the Radio Resource Control (RRC) layer) signaling. The base station device can transmit the stated settings information through an RRC Reconfiguration message, for example. The RRC Reconfiguration message includes the MeasObjectCLI information element, which defines the subject of measurement pertaining to CLI. The frequency position of the physical resource block to be measured can be specified in rssi-ResourceConfig-r16 in the MeasObjectCLI information element. In addition, through this information, the terminal device can be notified of information such as the measurement period, the measurement cycle, and the like as information on the timing of the measurement. Through this, the terminal device can be notified of the settings information for measuring the downlink signal, for example. In addition, the terminal device can be notified of the settings information for the SRS to be measured in the srs-ResourceConfig-r16 in the MeasObjectCLI information element. Through this, the terminal device can be notified of the settings information for measuring the uplink signal, for example.

The settings described above can be applied, for example, when the terminal device transmitting the uplink signal and the terminal device receiving the downlink signal are connected to the same base station device. In addition to this, when the terminal device transmitting the uplink signal and the terminal device transmitting the downlink signal are connected to different base station devices, the terminal devices may be notified of the settings information for measurement in an adjacent cell. In this case, the base station device can, for example, notify the terminal device that performs uplink communication of information for making it possible to measure a synchronization signal and notification signal (SSB) transmitted in the cell to which the terminal device that performs downlink communication is connected. This information can be provided even when the base station device providing the cell to which the terminal device transmitting the uplink signal is connected and the base station device providing the cell to which the terminal device receiving the downlink signal is connected are provided by different communication carriers. Information about the frequency channel over which the SSB is transmitted can be transmitted as the settings information for this measurement. The information of this frequency channel can be indicated by a Global Synchronization Channel Number (GSCN), for example. The terminal device can measure the SSB on the basis of the settings information, specify information on which location the SSB was transmitted within the frequency channel, information on the transmission timing of the SSB, and information on the wireless quality, such as the received signal strength, RSRP, RSRQ, and the like, and report this to the base station device. Note that the terminal device can report the frequency position of the SSB to the base station device using the GSCN or the NR Absolute Radio Frequency Channel Number (NR-ARFCN). If the base station device knows the frequency position at which the SSB of another base station device using the frequency channel adjacent to the frequency channel used by itself is transmitted, settings information specifying that frequency position may be transmitted to the terminal device. This frequency position can be communicated by the NR-ARFCN, for example. **In** addition, the base station device may notify the terminal device of the Measurement Gap, which is a period during which the SSB on the adjacent channel is measured without data being transmitted from or received by the base station device itself.

Here, the base station device is assumed to allocate the uplink and downlink resources to the terminal device connected to the base station device itself in a common time slot within a single frequency band. Although the resources allocated to the uplink and the resources allocated to the downlink are separated in the frequency region, it is assumed that the environment is one in which the uplink signal can interfere with the downlink signal. **In** this case, the base station device can stop transmitting the downlink signal to measure the uplink, and can also stop transmitting the uplink signal to measure the downlink, under the authority of the base station device itself. The base station device therefore holds information such as the location and sequence of the resource elements to which the uplink SRS is to be transmitted, the location where the downlink CSI-RS, SS, or other signals are to be transmitted, and the like. Accordingly, when the base station device causes the terminal device connected to the base station device itself to measure the effect of interference under the base station device itself, the terminal device that is to take the measurement can be notified of the information held in the base station device. On the other hand, the base station device does not hold information such as the SRS transmitted by a terminal device connected to another base station device, the transmission position of the CSI-RS, SS, or other signals transmitted by another base station device, and the like. Accordingly, in the present embodiment, the base station device can exchange information for measurement with other base station devices before generating the settings information for the measurement described above.

For example, a base station device connected to a terminal device that transmits an uplink signal (a terminal device that may cause interference) provides information on the transmission of the uplink signal to another base station device. For example, information indicating that a part of the frequency range is allocated to the uplink in the time slot of the downlink is transmitted to the other base station device. Note that the other base station device may be notified that the time slot allocated to the downlink has been reallocated to the uplink time slot. In addition, information indicating the frequency range (physical resource block) in which the signal is transmitted on the uplink, and information on the SRS transmitted by the terminal device that communicates in the resource allocated to the uplink (the resource element for transmission, the sequence used to generate the SRS, and the like) can be communicated to the other base station device. Upon receiving this notification, the other base station device can cause the terminal device that may experience interference due to the uplink signal to measure the uplink signal on the basis of the information in the notification. For example, the other base station device can specify a frequency range in which an uplink signal acting as a source of interference can be transmitted, and instruct the terminal device connected to the base station device itself to measure the RSSI within that frequency range. In addition, the other base station device may notify the connected terminal device of the resource to which the SRS is transmitted and the information on the sequence used to generate the SRS, and instruct the terminal device to measure the RSRP or the like of the SRS.

In addition, a base station device that is transmitting a downlink signal that may be interfered with by an uplink signal from a terminal device connected to another base station device can notify the other base station device, which can transmit the uplink signal that is the source of interference, of information on the CSI-RS and SS being transmitted by the base station device itself. **In** addition, the base station device can notify the other base station device of information indicating a resource (e.g., a physical resource block) planned to be allocated to the terminal device connected to the base station device itself, which is expected to experience interference from the uplink signal in the cell provided by the other base station device. The other base station device can generate the settings information for the measurement to be communicated to the terminal device such that the measurement is taken in that resource.

**In** addition to the notification of the settings information described above, the base station device conventionally has also notified the terminal device of the start and end of the measurement through Layer 3 signaling. When communicating the start and end of measurement through Layer 3 signaling, the measurement cannot be started and ended at an appropriate time, and for example, the time from when interference occurs between the uplink signal and the downlink signal and the measurement starts can increase. **In** addition, if, when the transmission of the downlink signal is stopped when measuring the uplink signal and the transmission of the uplink signal is stopped when measuring the downlink signal, the measurement cannot be stopped in a timely manner, the transmission of the downlink signal and the uplink signal can be stopped unnecessarily, causing a drop in the frequency utilization efficiency. **In** addition, if Layer 3 signaling is performed whenever a measurement is required, the frequency utilization efficiency can drop due to the overhead of that signaling. **In** addition, environments in which the **TDD** configuration of two adjacent cells is different can include environments in which the uplink and the downlink are used only for a short period of time (instantaneously), such as when a part of the uplink time slot is used dynamically as the downlink, or when a part of the downlink time slot is used dynamically as the uplink. In such an environment, it is assumed that when the start and end of measurement are instructed through Layer 3 signaling, the necessary interference measurement cannot be taken in real time due to the period from when the interference measurement should be taken to when the measurement is started being prolonged.

Accordingly, in the present embodiment, the base station device instructs the start and end of the measurement through Layer 1 or Layer 2 signaling. For example, the base station device can transmit an instruction to start and end the measurement through Layer 1 signaling using Downlink Control Information (DCI) included in the Physical Downlink Control Channel (PDCCH). In addition, the base station device may transmit an instruction to start and end the measurement through Layer 2 signaling using the Media Access Control Control Element (DL MAC CE) of the downlink.

The terminal device starts the measurement on the basis of the settings information communicated in advance through Layer 3 signaling by Layer 1 or Layer 2 signaling instructing the measurement to start. The terminal device then notifies the base station device of the measurement result. As in the past, the terminal device can communicate the measurement result using a Measurement Report, which is a Layer 3 message, for example. However, the configuration is not limited thereto, and the terminal device may transmit the measurement result to the base station device currently connected to using Layer 1 Uplink Control Information (UCI), Layer 2 Uplink MAC CE (UL MAC CE), or the like. In one example, the base station device can provide resources in advance for the physical uplink control channel for the UCI that includes the measurement result, and notify the terminal device of those resources.

The terminal device may also dynamically switch between reporting through Layer 1 or Layer 2 and reporting through Layer 3. For example, the terminal device that receives the downlink signal can report the measurement result through Layer 1 or Layer 2 when the measured value of the uplink signal is at least a predetermined value, and report the measurement result through Layer 3 when the measured value is less than the predetermined value. Additionally, for example, the terminal device that transmits the uplink signal may report the measurement result through Layer 1 or Layer 2 when the measured value of the downlink signal is less than a predetermined value, and report the measurement result through Layer 3 when the measured value is at least the predetermined value. The base station device can notify the terminal device of information indicating the predetermined value for determining whether to switch the message when reporting. Note that a first predetermined value for determining to switch to reporting through Layer 1 or Layer 2 when reporting through Layer 3, and a second predetermined value for determining to switch to reporting through Layer 3 when reporting through Layer 1 or Layer 2, may be the same value or may be different values. Although the foregoing describes an example in which it is determined whether to report using Layer 3 or report through a different layer (Layer 1 or Layer 2), whether a Layer 1 message or a Layer 2 message should be used for the report may be determined as well. The base station device may further notify the terminal device of a predetermined value for that determination.

**In** addition, the base station device may notify the terminal device whether the measurement result should be reported using a message in any one of Layer 1 to Layer 3. Here, the notification can be made using a Layer 3 message, for example. The base station device may transmit this notification to the terminal device along with the settings information described above, for example. **In** addition, the base station device may notify the terminal device to report using a Layer 1 or Layer 2 message when a predetermined event has been determined to have occurred based on a Layer 3 message such as a Measurement Report. **In** one example, the base station device can notify the terminal device to report the measurement result through a Layer 1 or Layer 2 message when the measured value of the uplink signal reported through a Layer 3 message from the terminal device that receives the downlink signal is at least a predetermined value. Additionally, the base station device can notify the terminal device to report the measurement result through a Layer 1 or Layer 2 message when the measured value of the downlink signal reported through a Layer 3 message from the terminal device that transmits the uplink signal is less than the predetermined value. **In** addition, the base station device can notify the terminal device, as an event, that the measured value of the uplink signal in the terminal device that receives the downlink signal is at least a predetermined value, that the measured value of the downlink signal in the terminal device that transmits the uplink signal is less than the predetermined value, and the like. Then, the base station device may instruct the terminal device of the transmitter of the report to report the measurement result through a Layer 1 or Layer 2 message when a report of the measured value resulting from the event is received through a Layer 3 message.

Although Layer 3 messages are inferior to Layer 1 and Layer 2 messages in terms of being in real time, the measurement results can be reported in detail. Using this characteristic, the terminal device may make a detailed report through a Layer 3 message, and using a Layer 1 or Layer 2 message, the terminal device may transmit a reduced amount of information, such as the value of the difference between the measured value notified through the Layer 3 message and the measured value to be reported. Additionally, when reporting the measured value through a Layer 1 or Layer 2 message, the terminal device may transmit the value of a difference between the measured value transmitted through a message in any one of Layer 1 to Layer 3 the previous time and the measured value to be reported. In addition, when reporting the measured value through a Layer 1 or Layer 2 message, the terminal device may notify the base station device only of information indicating whether the measured value is at least the predetermined value, as the information on the measured value.

The terminal device can notify the base station device of information indicating what kind of measurement result the measured value is as the measurement result information, for example. In other words, information such as whether the measured value is the result of measuring the SRS-RSRP of the uplink, the result of measuring the RSSI of the uplink, the result of measuring the SS or the CSI-RS of the downlink, or the like can be communicated to the base station device as the information on the measurement result. This information can be communicated as a resource indicator. In addition, when the information on the uplink measurement result is communicated using a UCI, that information may be transmitted using a UCI in a format that extends the conventional format used to communicate a CSI-RS or SSB measurement result. In this case, instead of the conventional resource indicator indicating a CSI-RS or SSB, a resource indicator indicating the SRS-RSRP or RSSI can be included in the UCI. Additionally, in this case, the field for the number of bits needed to uniquely specify the type of measurement is secured as a field for the resource indicator. Meanwhile, a field for holding the measured value of the RSSI or the measured value of the SRS-RSRP is secured as, for example, seven bits, and the measurement result can be transmitted using the field designated in an existing format. To reduce the overhead, the value of a difference from the previous measurement result may be transmitted using, for example, a four-bit field that stores the value of the difference from the previous measured value or the like, which does not exist in existing formats. Additionally, a UCI including a one-bit field indicating whether the measured value is at least a predetermined value may be transmitted to the base station device. Which of these formats should be used may be switched dynamically. **In** this case, for example, which of these formats is to be used can be designated by an instruction from the base station device.

Additionally, when starting a measurement using Layer 1 or Layer 2 signaling, the timing of the measurement may be instructed using Layer 1 or Layer 2 signaling. For example, the measurement timing may be designated according to the offset from the timing indicated by the frame or symbol in which Layer 1 or Layer 2 measurement start signaling was received and the measurement time (duration). The offset and duration can be dynamically instructed through Layer 1 or Layer 2 signaling. Here, from one or more sets of the offset and duration parameters set through Layer 3 signaling, the set of parameters that should actually be applied may be instructed through Layer 1 or Layer 2 signaling. Statically predetermined fixed values may also be used for the offset and duration.

As described above, the settings information for measurement for the purpose of evaluating interference between the uplink and the downlink is transmitted and received using Layer 3 signaling, and the measurement using that settings information is then started or ended using Layer 1 or Layer 2 signaling. This makes it possible to ensure that the measurement is taken at an appropriate time, which in turn makes it possible to take measurements appropriately while suppressing a drop in frequency utilization efficiency. Taking the measurement appropriately also makes it possible to flexibly allocate resources and perform communication while suppressing interference between the uplink communication and the downlink communication.

### (Device Configurations)

An example of the hardware configurations of the base station device and the terminal device will be described with reference to FIG. 2. **In** one example, the base station device and the terminal device each includes a processor 201, a ROM 202, a RAM 203, a storage device 204, and a communication circuit 205. The processor 201 is a computer configured including at least one processing circuit such as a general-purpose CPU (Central Processing Unit), an ASIC (Application-Specific Integrated Circuit), or the like, and executes overall processing of the device, the individual processes described above, and the like by reading out programs stored in the ROM 202, the storage device 204, and the like and executing the programs. The ROM 202 is a read-only memory that stores programs, information such as various parameters, and the like pertaining to the processing executed by the base station device and the terminal device. The RAM 203 functions as a workspace when the processor 201 executes programs, and is a random access memory that stores temporary information. The storage device 204 is constituted by, for example, a removable external storage device or the like. The communication circuit 205 is constituted by a circuit for wireless communication according to 5G or a successor standard thereof, for example. Although one communication circuit 205 is illustrated in FIG. 2, the base station device and the terminal device may each have two or more communication circuits, for example. Additionally, for example, the base station device and the terminal device can have an antenna shared by wireless communication circuits for 5G or a successor standard thereof. Note that the base station device and the terminal device may have separate antennas for 5G and a successor standard thereof. The terminal device may have a communication circuit for another wireless communication network, such as a wireless LAN. Note also that the base station device and the terminal device may have separate communication circuits for each of a plurality of frequency bands that can be used, or may have a common communication circuit for at least some of those frequency bands. The present embodiment assumes that the terminal device has a plurality of communication circuits capable of communicating in a common frequency band. The base station device can further have a wired communication circuit used when communicating with other base station devices, nodes of the core network, and the like.

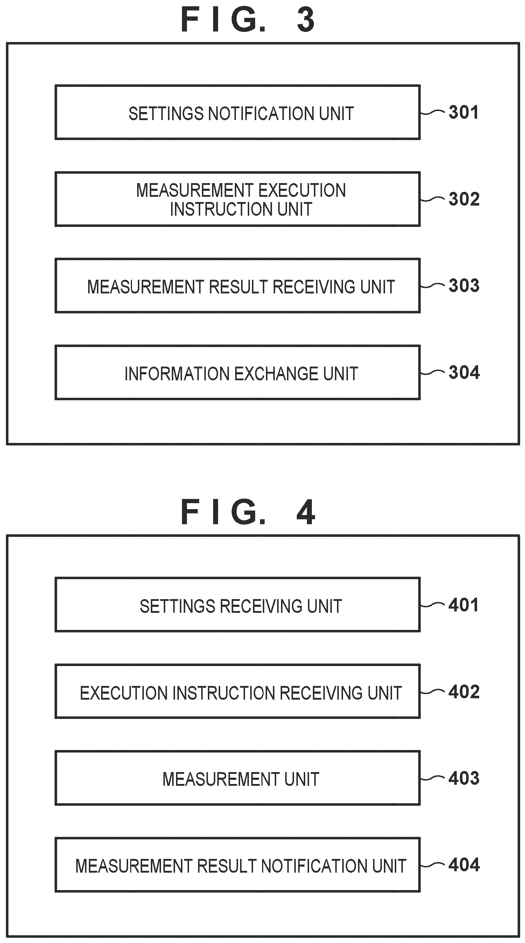

FIG. 3 is a diagram illustrating an example of the functional configuration of the base station device. The base station device has, as its functions, a settings notification unit 301, a measurement execution instruction unit 302, a measurement result receiving unit 303, and an information exchange unit 304, for example. Note that only the functions specifically related to the present embodiment are illustrated in FIG. 3, and various other functions that the base station device can have are not illustrated. For example, the base station device naturally has other functions generally provided in base station devices for 5G or a successor standard thereof. The function blocks in FIG. 3 are illustrated schematically, and the function blocks may be realized as an integrated unit, or may be further subdivided. Additionally, each of the functions in FIG. 3 may be realized, for example, by the processor 201 executing a program stored in the ROM 202 or the storage device 204, or by a processor inside the communication circuit 205 executing predetermined software. With respect to the processing performed by each function unit, the processing described above will not be described in detail here, and only an overview of the general functions thereof will be given.

The settings notification unit 301 notifies the connected terminal device of the settings information for measurement to evaluate the impact of interference of the uplink signal on the downlink signal using Layer 3 (e.g., RRC layer) signaling. For example, if the first terminal device which is connected is the device which experiences interference from the uplink signal transmitted from the second terminal device, the settings notification unit 301 notifies the first terminal device of the settings information for causing the uplink signal transmitted from the second terminal device to be measured. Additionally, if the first terminal device which is connected is, for example, a device that transmits a signal that interferes with the downlink signal to the second terminal device, the settings notification unit 301 notifies the first terminal device of the settings information for measuring the quality of the resource through which the downlink signal can be transmitted for the second terminal device, for example. The settings information has been described in detail above, and thus detailed descriptions thereof will not be given here.

The measurement execution instruction unit 302 transmits an instruction to start and end the measurement of the wireless quality which is based on the settings information, to the terminal device notified of the settings information by the settings notification unit 301 through Layer 1 or Layer 2 signaling. The measurement result receiving unit 303 receives the result of the measurement from the terminal device instructed to execute the measurement by the measurement execution instruction unit 302. Note that the measurement result receiving unit 303 receives the information on the measurement result from a message determined by the terminal device according to, for example, the type of the message serving as the instruction to the terminal device from the settings notification unit 301, information on a predetermined value communicated to the terminal device by the settings notification unit 301 to determine the type of the message, and the like.

The information exchange unit 304 exchanges information for determining the settings of the measurement, the information on the measurement result, and the like with other base station devices. For example, if the first terminal device that is connected is a device that experiences interference from the uplink signal transmitted from the second terminal device connected to another base station device, the information exchange unit 304 can receive information on the SRS transmitted by the second terminal device from the other base station device. In this case, the information exchange unit 304 can provide, to the other base station device, information on downlink resources that can be allocated to the first terminal device. Additionally, if the first terminal device that is connected is a device that transmits a signal that interferes with the downlink signal to the second terminal device, the information exchange unit 304 can provide information on the SRS transmitted by the first terminal device to the other base station device, for example. In this case, the information exchange unit 304 can receive, from the other base station device, information on downlink resources that can be allocated to the second terminal device.

FIG. 4 is a diagram illustrating an example of the functional configuration of the terminal device. The terminal device includes, as its functions, a settings receiving unit 401, a measurement instruction receiving unit 402, a measurement unit 403, and a measurement result notification unit 404, for example. Note that only the functions specifically related to the present embodiment are illustrated in FIG. 4, and various other functions that the terminal device can have are not illustrated. For example, the terminal device naturally has other functions generally provided in terminal devices for 5G or a successor standard thereof. The function blocks in FIG. 4 are illustrated schematically, and the function blocks may be realized as an integrated unit, or may be further subdivided. Additionally, each of the functions in FIG. 4 may be realized, for example, by the processor 201 executing a program stored in the ROM 202 or the storage device 204, or by a processor inside the communication circuit 205 executing predetermined software. With respect to the processing performed by each function unit, the processing described above will not be described in detail here, and only an overview of the general functions thereof will be given.

The settings receiving unit 401 receives the settings information provided from the base station device as described above through Layer 3 signaling. The execution instruction receiving unit 402 receives a measurement execution start instruction and execution end instruction from the base station device through Layer 1 or Layer 2 signaling. When a measurement execution start instruction has been received by the execution instruction receiving unit 402, the measurement unit 403 measures the wireless quality on the basis of the settings information received by the settings receiving unit 401. The measurement result notification unit 404 notifies the connected base station device of the result of the measurement performed by the measurement unit 403. Note that the measurement result notification unit 404 can determine whether to communicate the measurement result using a message from Layer 1 to Layer 3 on the basis of an instruction received from the base station device or on the basis of a comparison between a predetermined value received from the base station device and the wireless quality in the measurement result, for example. The measurement result notification unit 404 then notifies the base station device of the measurement result through the determined type of message.

### (Flow of Processing)

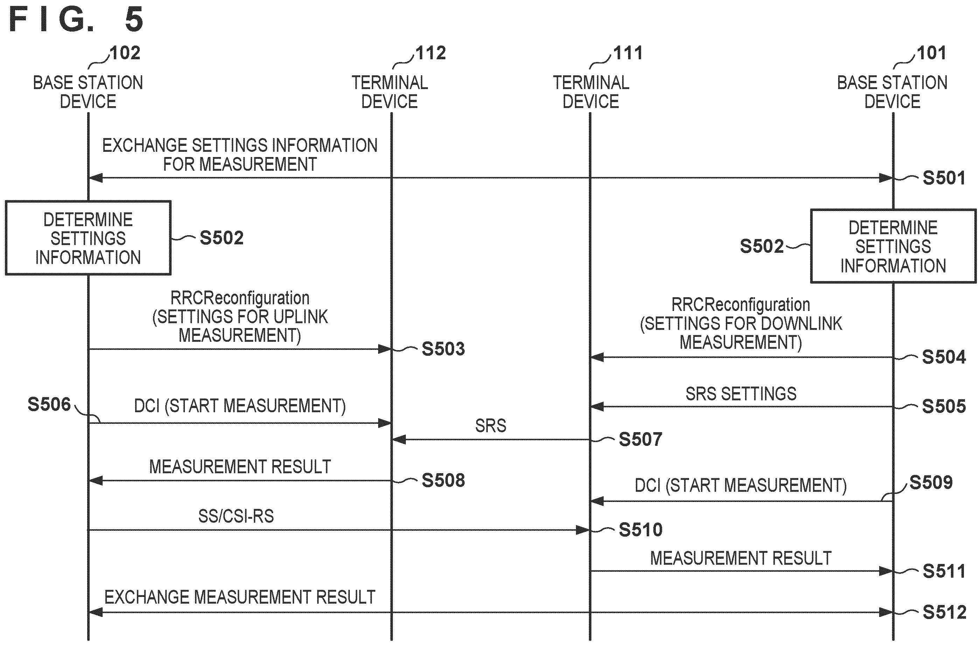

An example of the flow of processing executed in the wireless communication system will be described next with reference to FIG. 5. An example of a case where measurement is taken in an environment where the uplink signal transmitted by the terminal device 111 connected to the base station device 101 can interfere with the downlink signal transmitted from the base station device 102 to the terminal device 112, as in FIG. 1, will be described.

First, information for measurement is shared between the base station device 101 to which the terminal device 111 is connected and the base station device 102 to which the terminal device 112 is connected (S501). For example, the base station device 101 provides information on the SRS transmitted by the terminal device 111 to the base station device 102 such that the measurement of the uplink signal transmitted by the terminal device 111 connected to the base station device 101 itself can be performed by the terminal device 112 connected to the base station device 102. Additionally, the base station device 102 can provide, to the base station device 101, information such as a frequency range in which downlink resources may be allocated to the terminal device 112. Note that when the terminal device 111 and the terminal device 112 are both connected to a single base station device, the procedure for sharing information between the base station devices is skipped.

The base station device 101 and the base station device 102 determine the settings information to be communicated to the connected terminal device on the basis of the exchanged information (S502). For example, the base station device 102 generates settings information for causing the terminal device 112 to measure the SRS transmitted from the terminal device 111, and notifies the terminal device 112 of that settings information through Layer 3 signaling (S503). Additionally, the base station device 101 generates settings information for causing the terminal device 111 to measure the downlink signal transmitted from the base station device 102, and notifies the terminal device 111 of that settings information through Layer 3 signaling (S504). The base station device 101 also transmits SRS settings information to the terminal device 111 (S505), and causes the SRS to be transmitted. Note that if the terminal device 111 already has the SRS settings information, the transmission and reception of the settings information may be skipped. The base station device 102 instructs the terminal device 112 to start measuring the SRS using Layer 1 DCI, for example (S506). The terminal device 112 measures the SRS on the basis of that instruction (S507), and transmits the measurement result to the base station device 102 (S508). Additionally, the base station device 101 instructs the terminal device 111 to start measuring the downlink signal using Layer 1 DCI, for example (S509). The terminal device 111 then measures the downlink signal (e.g., the SS or CSI-RS) transmitted from the base station device 102 (S510), and transmits the measurement result to the base station device 102 (S511). The base station device 101 and the base station device 102 exchange the measurement results received from the terminal devices connected thereto with other base station devices as necessary (S512). For example, the base station device 102 notifies the base station device 101 of the measurement result for the uplink signal from the terminal device 111 in the terminal device 112. Through this, the base station device 101 can cause the terminal device 111 to transmit the uplink signal when the uplink interference is less than a predetermined value, and prevent the terminal device 111 from transmitting the uplink signal when the interference is at least the predetermined value. Additionally, the base station device 101 can estimate the wireless quality, such as the SINR, of the downlink in the terminal device 112 when the terminal device 111 transmits the uplink signal, on the basis of, for example, the measurement result for the downlink signal in the terminal device 111 and the measurement result for the uplink signal in the terminal device 112, communicated by the base station device 102. The base station device 101 may then determine that the transmission of the uplink signal by the terminal device 111 is permissible if the estimated value is at least a predetermined value.

As described above, according to the present embodiment, a measurement by a terminal device can be taken at an appropriate time under conditions where an uplink signal interferes with a downlink signal. As a result, the measurement can be taken appropriately while suppressing a drop in frequency utilization efficiency, which in turn makes it possible to flexibly allocate resources and perform communication while suppressing interference between the uplink communication and the downlink communication. This makes it possible to contribute to Goal 9 of the United Nations-led Sustainable Development Goals (SDGs), which is to "build resilient infrastructure, promote inclusive and sustainable industrialization, and foster innovation".

The invention is not limited to the foregoing embodiments, and various variations/changes are possible within the spirit of the invention.

This application claims priority from Japanese Patent Application No. 2022-141010, filed September 5, 2022, and the entire content thereof is hereby incorporated by reference herein.

## Claims

1. A base station device comprising:
notification means for notifying, through Layer 3 signaling, a first terminal device of settings information for measurement of a first quality of an uplink signal which interferes with a downlink signal received by the first terminal device and which is transmitted by a second terminal device; and
instruction means for transmitting to the first terminal device, through Layer 1 or Layer 2 signaling, an instruction to execute the measurement of the first quality or stop the measurement currently underway on the basis of the settings information.

2. The base station device according to claim 1,
wherein the Layer 2 signaling is signaling using a Downlink Media Access Control Control Element (DL MAC CE).

3. The base station device according to claim 1,
wherein the Layer 1 signaling is signaling using Downlink Control Information (DCI).

4. The base station device according to claim 1,
wherein the Layer 3 signaling is signaling using an RRC Reconfiguration message.

5. The base station device according to claim 1, further comprising:
receiving means for receiving a result of the measurement by the first terminal device.

6. The base station device according to claim 5,
wherein the notification means further notifies the first terminal device, through the Layer 3 signaling, of information instructing the first terminal device whether the result of the measurement is to be transmitted using a Layer 1 message, a Layer 2 message, or a Layer 3 message.

7. The base station device according to claim 5,
wherein the notification means further notifies the first terminal device, through the Layer 3 signaling, of a predetermined value, pertaining to the first quality, for the first terminal device to determine whether the result of the measurement is to be transmitted using a Layer 1 message, a Layer 2 message, or a Layer 3 message.

8. The base station device according to claim 1,
wherein the settings information includes information used to measure a Reference Signal Received Power (RSRP) of an uplink Sounding Reference Signal (SRS) as the uplink signal or a Received Signal Strength Indicator (RSSI) of a frequency range in which the uplink signal is transmitted.

9. The base station device according to claim 1,
wherein in a case where the second terminal device is connected to the base station device, the notification means notifies the second terminal device, through Layer 3 signaling, of settings information for measurement of a second quality of a downlink signal transmitted from the base station device to the first terminal device, and
the instruction means transmits to the second terminal device, through Layer 1 or Layer 2 signaling, an instruction to execute the measurement of the second quality or stop the measurement currently underway on the basis of the settings information.

10. The base station device according to claim 9, further comprising:
providing means for, in a case where an uplink signal transmitted by the second terminal device interferes with a downlink signal transmitted to a third terminal device connected to an other base station device, providing, to the other base station device, information for enabling the third terminal device to measure a third quality of the uplink signal transmitted by the second terminal device.

11. The base station device according to claim 10, further comprising:
receiving means for receiving, from the other base station device, information for enabling the second terminal device to measure a fourth quality of a downlink signal transmitted from the other base station device to the third terminal device.

12. The base station device according to claim 1, further comprising:
receiving means for, in a case where the second terminal device is connected to an other base station device, receiving, from the other base station device, information for enabling the first terminal device to measure the first quality.

13. The base station device according to claim 12, further comprising:
providing means for providing, to the other base station device, information for enabling the second terminal device to measure a fifth quality of a downlink signal transmitted from the base station device to the first terminal device.

14. A terminal device comprising:
setting means for, in a case where a downlink signal is received from a base station device to which the terminal device is connected, making a setting for measurement of a first quality of an uplink signal which interferes with the downlink signal received by the terminal device and which is transmitted by a second terminal device, by receiving settings information for the measurement of the first quality from the base station device through Layer 3 signaling;
measuring means for executing an instructed measurement by receiving from the base station device, through Layer 1 or Layer 2 signaling, an instruction to execute the measurement of the first quality or stop the measurement currently underway on the basis of the settings information; and
notification means for notifying the base station device of a result of the measurement.

15. The terminal device according to claim 14,
wherein the Layer 2 signaling is signaling using a Downlink Media Access Control Control Element (DL MAC CE).

16. The terminal device according to claim 14,
wherein the Layer 1 signaling is signaling using Downlink Control Information (DCI).

17. The terminal device according to claim 14,
wherein the Layer 3 signaling is signaling using an RRC Reconfiguration message.

18. The terminal device according to claim 14,
wherein the notification means transmits the result of the measurement to the base station device using one of a Layer 1 message, a Layer 2 message, or a Layer 3 message on the basis of an instruction received from the base station device through Layer 3 signaling.

19. The terminal device according to claim 14,
wherein the notification means receives from the base station device, through Layer 3 signaling, a predetermined value, pertaining to the first quality, for determining whether the result of the measurement is to be transmitted using a Layer 1 message, a Layer 2 message, or a Layer 3 message, and transmits the result of the measurement to the base station device using one of a Layer 1 message, a Layer 2 message, or a Layer 3 message on the basis of the first quality and the predetermined value.

20. The terminal device according to claim 14,
wherein the settings information includes information used to measure a Reference Signal Received Power (RSRP) of an uplink Sounding Reference Signal (SRS) as the uplink signal or a Received Signal Strength Indicator (RSSI) of a frequency range in which the uplink signal is transmitted.

21. The terminal device according to claim 14,
wherein in a case where an uplink signal transmitted from the terminal device to the base station device interferes with a downlink signal transmitted by the base station device or an other base station device, the setting means makes a setting for measurement of a second quality of the downlink signal transmitted by the base station device or the other base station device by receiving from the base station device, through Layer 3 signaling, settings information for measurement of the second quality,
the measuring means executes an instructed measurement by receiving from the base station device, through Layer 1 or Layer 2 signaling, an instruction to execute the measurement of the second quality or stop the measurement currently underway on the basis of the settings information, and
the notification means notifies the base station device of a result of the measurement of the second quality.

22. A control method performed by a base station device, the control method comprising:
notifying, through Layer 3 signaling, a first terminal device of settings information for measurement of a first quality of an uplink signal which interferes with a downlink signal received by the first terminal device and which is transmitted by a second terminal device; and
transmitting to the first terminal device, through Layer 1 or Layer 2 signaling, an instruction to execute the measurement of the first quality or stop the measurement currently underway on the basis of the settings information.

23. A control method performed by a terminal device, the control method comprising:
making a setting, in a case where a downlink signal is received from a base station device to which the terminal device is connected, for measurement of a first quality of an uplink signal which interferes with the downlink signal received by the terminal device and which is transmitted by a second terminal device, by receiving settings information for the measurement of the first quality from the base station device through Layer 3 signaling;
executing an instructed measurement by receiving from the base station device, through Layer 1 or Layer 2 signaling, an instruction to execute the measurement of the first quality or stop the measurement currently underway on the basis of the settings information; and
notifying the base station device of a result of the measurement.

24. A program that causes a computer to function as the base station device according to any one of claims 1 to 13.

25. A program that causes a computer to function as the terminal device according to any one of claims 14 to 21.
